**Europäisches Patentamt**

**European Patent Office**

**Office européen des brevets**

(19)

(11) Veröffentlichungsnummer: **0 472 133 A1**

## (12) EUROPÄISCHE PATENTANMELDUNG

(21) Anmeldenummer: **91113830.3**

(22) Anmeldetag: **19.08.91**

(51) Int. Cl.⁵: **F16K 11/074**, F01B 3/00

(30) Priorität: **23.08.90 CH 2739/90**

(43) Veröffentlichungstag der Anmeldung:
**26.02.92 Patentblatt 92/09**

(84) Benannte Vertragsstaaten:
**AT DE ES FR GB IT NL SE**

(71) Anmelder: **Richner, Gerold**
**Am Rebebänkli 9**
**CH-5610 Wohlen(CH)**
Anmelder: **Wernli, Bruno P.**
**Zelgli 102**
**CH-5117 Habsburg(CH)**
Anmelder: **Richner, Peter**

Probst Huber-Strasse 7
**CH-5607 Hägglingen(CH)**
Anmelder: **RIWISA AG KUNSTSTOFFWERKE**
**Dottikerstrasse 8**
**CH-5607 Hägglingen(CH)**

(72) Erfinder: **Kägi, René**
**Laubstenstrasse 24**
**CH-8712 Stäfa(CH)**

(74) Vertreter: **Petschner, Goetz**
**Patentanwaltsbüro G. Petschner**
**Seidengasse 18**
**CH-8001 Zürich(CH)**

(54) **Druckluft-Radialmotor.**

(57) Der Druckluft-Radialmotor umfasst eine über einen rotationsfest im Motorgehäuse (10) angeordneten Steuerkopf (17) druckluftgesteuerten, eine Mehrzahl Kraftzellen (4) tragenden Stützscheibe (11), welche über die Kraftzellen (4) mit einer konischen, die Motorwelle (13) tragenden Gegenscheibe (14) in Rotationsverbindung steht. Dieser Motor zeichnet sich aus durch eine Membrane (30) an der äusseren Stirnseite des Steuerkopfes (17), die innenseitig unter dem Strömungsdruck des den Steuerkopf (17) antriebsseitig durchströmenden Druckmediums steht und die aussenseitig den Steuerkopf (17) über eine Gegenfläche (31) im Motorgehäuse (10) gegen die Stützscheibe (11) hin abstützt.

Ein solcher Druckluft-Radialmotor weist bei jeder Antriebsgeschwindigkeit ein höchstes Drehmoment auf.

Fig.1

Die vorliegende Erfindung betrifft einen Druckluft-Radialmotor mit einer über einen rotationsfest im Motorgehäuse angeordneten Steuerkopf druckluftgesteuerten, eine Mehrzahl Kraftzellen tragenden Stützscheibe, welche über die Kraftzellen mit einer konischen, die Motorwelle tragenden Gegenscheibe in Rotationsverbindung steht.

Problematisch bei solchen Druckluft-Radialmotoren ist u.a. das Erfordernis einer dichtenden Anlage zwischen stillstehender Kontaktfläche des Steuerkopfes und rotierender Kontaktfläche der Stützscheibe, um Druckverluste des Steuermediums zu vermeiden, was einem reibungsarmen Betrieb zur Vermeidung von Drehmomentverlusten diametral gegenüber steht.

Versuche, den Steuerkopf mittels Federmittel oder, etwa gemäss CH-Patent Nr. 584'857, mittels Balgmittel an die Stützscheibe anzupressen, sind nicht nur am notwendigen technischen Aufwand, sondern insbesondere auch am, insbesondere bei niedrigen Drehzahlen völlig ungenügenden Drehmoment infolge Reibungsverlusten zwischen den Kontaktflächen von rotationsfestem Steuerkopf und rotierender Stützscheibe gescheitert.

Es ist somit Aufgabe der vorliegenden Erfindung, einen Druckluft-Radialmotor zu schaffen, der sowohl einen druckluftverlustfreien Betrieb als auch ein immer optimales Drehmoment bei jeder Drehzahl mit geringstem technischen Aufwand gewährleistet.

Dies wird erfindungsgemäss zunächst erreicht durch eine Druckscheibe an der äusseren Stirnseite des Steuerkopfes, die innenseitig unter dem Strömungsdruck des den Steuerkopf antriebsseitig durchströmenden Druckmediums steht und die aussenseitig den Steuerkopf über eine Gegenfläche im Motorengehäuse gegen die Stützscheibe hin abstützt.

Diese Druckscheibe kann kolbenartig ausgebildet oder eine eine Membrane sein.

Hierbei kann eine vorteilhafte Ausgestaltung des erfindungsgemässen Druckluft-Radialmotors darin bestehen, dass die Membrane eine runde, gummielastische Scheibe ist, welche in einer stirnseitigen Ringnut des Steuerkopfes einsitzt und eine stirnseitige Wandung für einen Druckraum im Steuerkopf bildet; oder aber, dass die Membrane durch partielle Wandungsschwächung der äusseren Stirnseite des Steuerkopfes gebildet ist und innenseitig einen Druckraum im Steuerkopf begrenzt.

Vorteilhaft ist es zudem, wenn die Membrane wenigstens in ihrem wirksamen Hubbereich eine lineare Charakteristik besitzt.

Um weiter an einem solchen Druckluft-Radialmotor eine optimale Schalldämpfung ohne grossen technischen Aufwand zu ermöglichen, ist es weiter von Vorteil, wenn zwischen dem Mantel des Steuerkopfes und dem diesen umgebenden Gehäuseteil eine Ringkammer besteht, die wenigstens teilweise mit einem schalldämpfenden luftporösen Material durchsetzt ist.

Eine beispielsweise Ausführungsform des Erfindungsgegenstandes ist nachfolgend anhand der Zeichnung näher erläutert. Es zeigen:

Fig. 1 in einer schematischen Schnittdarstellung einen erfindungsgemässen Druckluft-Radialmotor; und

Fig. 2 in schematischer Schnittdarstellung in grösserem Massstab die Steuerkopfseite des Druckluft-Radialmotors gemäss Fig. 1.

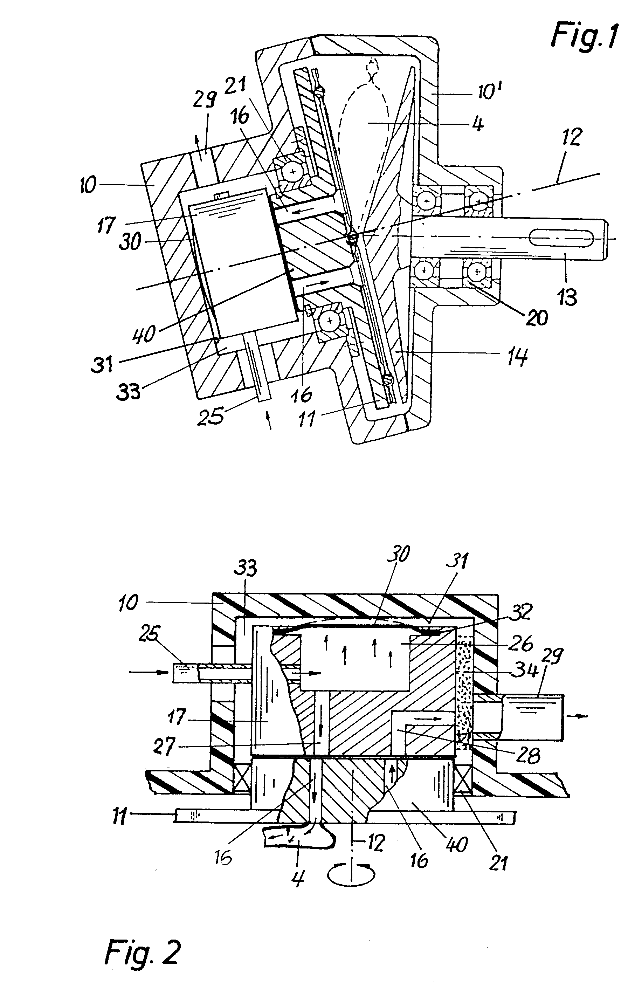

Der in Fig. 1 schematisch gezeigte Druckluft-Radialmotor umfasst zwei, in der Regel leicht voneinander trennbare Gehäuseteile 10, 10', in deren Kammer sich eine rotierende flache Stützscheibe 11 erstreckt, deren Rotationsachse 12 mit einer Antriebswelle 13 einen, der Konizität einer mit der Antriebswelle 13 verbundenen konischen Stützscheibe 14 entsprechenden Winkel einschliesst.

Auf der flachen Stützscheibe 11 stützt sich eine Kraftzellenanordnung mit einer Mehrzahl Kraftzellen 4 ab, welche in formschlüssiger Drehmitnahmeverbindung mit der flachen Stützscheibe 11 steht und deren Zellen 4 über entsprechende Anschlussbohrungen 16 in der Stützscheibe 11 resp. deren Rotationsnabe 40 mit einem Steuerkopf 17 resp. mit einer nicht näher gezeigten Druckquelle in Strömungsverbindung stehen. Ferner steht die Kraftzellenanordnung mit der konischen Stützscheibe 14 in Wirkungsverbindung.

Die Wirkungsweise solcher Druckluft-Radialmotoren ist bekannt. Um den Motor in Betrieb zu setzen, wird Druckmedium, z.B. Druckluft, durch den Steuerkopf 17 zugeleitet. Dieses Druckmedium gelangt in die momentan angesteuerte Kraftzelle 4, welche ihr Volumen vergrössert. Dadurch resultiert infolge der vorbeschriebenen Anordnung der beiden Stützscheiben 11 und 14 ein dem Druck des Steuermediums proportionales Drehmoment auf die konische Stützscheibe 14, so dass diese, zusammen mit der flachen Stützscheibe 11, rotiert. Entsprechend sind Stützscheibe 14 resp. Antriebswelle 13 über Kugellagermittel 20 und Stützscheibe 11 resp. Rotationsnabe 40 über Kugellagermittel 21 am Motorgehäuse 10, 10' abgestützt.

Wie Fig. 2 mehr im Einzelnen zeigt, gelangt das Druckmedium über einen Einlasskanal 25 in den, im Motorgehäuse 10, 10' drehfesten Steuerkopf 17 resp. in dessen Druckraum 26 und von dort in einen üblicherweise radial langlochförmigen Zuführkanal 27, welcher mit den umlaufenden Anschlussbohrungen 16 temporär kommuniziert, indem die Stirnflächen von Rotationsnabe 40 und Steuerkopf 17 in Reibungskontakt und möglichst dichtend aneinanderliegen.

Weiter ist ein Auslasskanal 28 in gleicher langlochförmiger Ausgestaltung wie der Zuführkanal 27 im Steuerkopf 17 ausgebildet, der über einen Auslass-Stutzen 29 am Gehäuseteil 10 ausmündet und der wechselweise zum Zuführkanal 27 mit den umlaufenden Anschlussbohrungen 16 in Strömungsverbindung gelangt.

Soweit ist die Ausgestaltung des Steuerkopfteiles eines Druckluft-Radialmotores ansich bekannt.

Wie bereits erwähnt, besteht hier das Problem des möglichst dichtenden Reibungskontaktes zwischen der stillstehenden Kontaktfläche des Steuerkopfes 17 und der rotierenden Kontaktfläche der Rotationsnabe 40.

Dieses Problem ist hier erfindungsgemäss gelöst durch eine Membrane 30 an der äusseren Stirnseite des Steuerkopfes 17, welche innenseitig unter dem Strömungsdruck des den Steuerkopf 17 antriebsseitig durchströmenden Druckmediums steht und die aussenseitig den Steuerkopf 17 über eine Gegenfläche 31 des einen Gehäuseteiles 10 abstützt. Hierfür bildet die Membrane 30 eine stirnseitige Wandung für den Druckraum 26 im Steuerkopf 17.

Vorzugsweise ist die Membrane 30 von runder Grundfläche und aus einem gummielastischen Material und in eine stirnseitige Ringnut 32 des Steuerkopfes 17 eingesetzt.

Es besteht aber auch die Möglichkeit, die Membrane 30 durch entsprechendes Materialabtragen der Stirnfläche des Druckraumes 26 resp. eines entsprechenden Bereiches der äusseren Stirnfläche des Steuerkopfes 17 herauszubilden.

In drucklosem Zustand besteht zwischen der druckentlasteten Membrane 30 und der Gegenfläche 31 des Gehäuses ein geringer Luftspalt und die beiden Kontaktflächen von Steuerkopf 17 und Rotationsnabe 40 liegen praktisch ohne Druck aneinander, was gestattet, die Antriebswelle 13 des Druckluft-Radialmotors praktisch reibungslos von Hand zu verdrehen.

Mit der Zuführung von Druckluft hingegen wird die Membrane 30 druckabhängig nach aussen gewölbt und diese drückt dabei den Steuerkopf 17 gegen die Rotationsnabe 40, so dass die beiden Kontaktflächen von Steuerkopf 17 und Rotationsnabe 40 mit einem vom Steuerdruck des Druckmediums abhängigen Druck dichtend, aber mit geringster Reibung aneinander liegen.

Diese dem, für eine Drehzahl- resp. Drehmomentregelung variablen Steuerdruck des Druckmediums proportionale Beaufschlagung des Steuerkopfes 17 zur Anlage an die Rotationsnabe 40 bewirkt eine automatische Abdichtung zwischen den genannten Kontaktflächen im Betrieb bei geringster Reibung zwischen diesen, so dass bei jeder Drehzahl ein optimales Drehmoment erreichbar ist. Hierbei ist es zur Optimierung der Membranfunktion wesentlich, wenn diese wenigstens innerhalb ihres Funktionsbereiches eine lineare Charakteristik besitzt.

Sollte die Linearität mit einfachen technischen Mitteln nicht zu erreichen sein, oder bei bestimmten Anwendungen die quasilineare Funktionsweise nicht ausreichen, so könnte die Andruckregulierung auch von einer abgedichteten, axial beweglichen kolbenförmigen Druckscheibe übernommen werden (nicht gezeigt).

Ein weiteres Problem bei solchen Druckluft-Radialmotoren besteht in der Dämpfung der Betriebsgeräusche, wofür in der Regel Schalldämpfermittel auf den Auslass-Stutzen 29 aufgeschraubt werden.

Um dies nun effektiver zu gestalten, wird hier erfindungsgemäss zwischen Steuerkopf 17 und dem diesen umgebenden Gehäuseteil 10 eine Ringkammer 33 ausgebildet, welche partiell oder umfänglich mit schalldämpfendem luftporösen Material 34 durchsetzt wird.

Aus dem Vorstehenden ergibt sich somit ein Druckluft-Radialmotor, der sich insbesondere durch ein hohes Drehmoment und geräuscharmen Betrieb auszeichnet.

## Patentansprüche

1. Druckluft-Radialmotor, mit einer über einen rotationsfest im Motorgehäuse (10) angeordneten Steuerkopf (17) druckluftgesteuerten, eine Mehrzahl Kraftzellen (4) tragenden Stützscheibe (11), welche über die Kraftzellen (4) mit einer konischen, die Motorwelle (13) tragenden Gegenscheibe (14) in Rotationsverbindung steht, gekennzeichnet durch eine Druckscheibe (30) an der äusseren Stirnseite des Steuerkopfes (17), die innenseitig unter dem Strömungsdruck des den Steuerkopf (17) antriebsseitig durchströmenden Druckmediums steht und die aussenseitig den Steuerkopf (17) über eine Gegenfläche (31) im Motorgehäuse (10) gegen die Stützscheibe (11) hin abstützt.

2. Druckluft-Radialmotor nach Anspruch 1, dadurch gekennzeichnet, dass die Druckscheibe (30) eine Membrane ist.

3. Druckluft-Radialmotor nach Anspruch 2, dadurch gekennzeichnet, dass die Membrane (30) eine runde, gummielastische Scheibe ist, welche in einer stirnseitigen Ringnut (32) des Steuerkopfes (17) einsitzt und eine stirnseitige Wandung für einen Druckraum (26) im Steuerkopf (17) bildet (Fig. 2).

4. Druckluft-Radialmotor nach Anspruch 2, dadurch gekennzeichnet, dass die Membrane (30) durch partielle Wandungsschwächung der äusseren Stirnseite des Steuerkopfes (17) gebildet ist und innenseitig einen Druckraum (26) im Steuerkopf (17) begrenzt.

5. Druckluft-Radialmotor nach Anspruch 2, dadurch gekennzeichnet, dass die Membrane (30) wenigstens in ihrem wirksamen Hubbereich eine lineare Charakteristik besitzt.

6. Druckluft-Radialmotor nach Anspruch 1, dadurch gekennzeichnet, dass die Druckscheibe (30) kolbenartig ausgebildet und axial verschiebbar am Steuerkopf (17) abgestützt ist.

7. Druckluft-Radialmotor nach Anspruch 1, dadurch gekennzeichnet, dass zwischen dem Mantel des Steuerkopfes (17) und dem diesen umgebenden Gehäuseteil (10) eine Ringkammer (33) besteht, die wenigstens teilweise mit einem schalldämpfenden luftporösen Material (34) durchsetzt ist.

EP 0 472 133 A1

Fig.1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | CH-A-584 857 (INVENTA AG) <br> * Spalte 2, Zeile 12 - Zeile 40 * * <br> – – – | 1 | F 16 K 11/074 <br> F 01 B 3/00 |
| A | FR-A-2 149 754 (LINDE AKTIENGESELLSCHAFT) <br> * Seite 3, Zeile 22 - Seite 7, Zeile 5; Abbildungen * * <br> – – – | 1 | |
| A | GB-A-2 227 073 (MB GROUP PLC) <br> * Seite 14, Zeile 1 - Zeile 34; Abbildungen 11-13 * * <br> – – – | 1 | |
| A | FR-A-1 251 338 (SOCIETE NANTAISE DE FONDERIES) <br> * Seite 1, Spalte 1, Zeile 23 - Seite 2, Spalte 1, Zeile 16; Abbildungen 1,2 * * <br> – – – | 1 | |
| A | DE-B-1 003 039 (GUSSWERK P. SAALMANN & SOHN) <br> * Spalte 3, Zeile 12 - Spalte 4, Zeile 28; Abbildung * * <br> – – – | 1 | |
| A | GB-A-1 197 050 (WALKER) <br> – – – – – | 1 | |

**RECHERCHIERTE SACHGEBIETE (Int. Cl.5)**

F 01 B
F 16 K

Der vorliegende Recherchenbericht wurde für alle Patentansprüche erstellt

| Recherchenort | Abschlußdatum der Recherche | Prüfer |
|---|---|---|
| Den Haag | 31 Oktober 91 | MOUTON J.M.M.P. |